Europäisches Patentamt

European Patent Office

Office européen des brevets

(19)

(11) Veröffentlichungsnummer: **0 252 871 B1**

(12) **EUROPÄISCHE PATENTSCHRIFT**

(45) Veröffentlichungstag der Patentschrift: 31.07.91

(51) Int. Cl.⁵: **B25J 9/00**, B25J 5/02

(21) Anmeldenummer: 87730060.8

(22) Anmeldetag: 22.05.87

(54) Industrieroboter.

(30) Priorität: 09.07.86 DE 3623506

(43) Veröffentlichungstag der Anmeldung:
13.01.88 Patentblatt 88/02

(45) Bekanntmachung des Hinweises auf die
Patenterteilung:
31.07.91 Patentblatt 91/31

(84) Benannte Vertragsstaaten:
AT BE CH DE ES FR GB GR IT LI LU NL SE

(56) Entgegenhaltungen:
DD-A- 238 566
DD-A- 240 351
DE-A- 3 445 849
GB-A- 2 712 574

(73) Patentinhaber: MANNESMANN Aktiengesellschaft
Mannesmannufer 2
W-4000 Düsseldorf 1(DE)

(72) Erfinder: Kaufmann, Karl-Ernst
Haupstrasse 59
W-5802 Wetter(DE)

(74) Vertreter: Meissner, Peter E., Dipl.-Ing. et al
Patentanwaltsbüro Meissner & Meissner,
Herbertstrasse 22
W-1000 Berlin 33(DE)

EP 0 252 871 B1

## Beschreibung

Die Erfindung betrifft Industrieroboter auf einem Portal der mittels Rollen auf Fahrschienen eines Trägers verfahrbar ist, wobei an dem am Träger verfahrbaren Arbeitsarm ein Anschlußkopf für ein Werkzeug oder ein Greifwerkzeug vorgesehen ist.

Ein derartiger Industrieroboter ist durch die DE-C- 32 43 335 bekannt. Die Fahrschienen sind Teile der Träger, die wegen ihrer großen Abmessungen nicht oder nur mit einem unvertretbar großen Aufwand in der erforderlichen Präzision hergestellt werden können, damit der Industrieroboter die Aufnahme- und Abgabestellen millimetergenau anfahren kann.

Aufgabe der Erfindung ist es daher, eine Führung für einen Industrieroboter mit geringem Aufwand so zu gestalten, daß jede Anfahrposition exakt erreichbar ist. Diese Aufgabe wird dadurch gelöst, daß die Schienen über mit Abstand voneinander angeordneten Schienenunterlagen ausrichtbar auf dem Träger bzw. den Trägern befestigt sind. Die Schienenunterlagen werden in genau fluchtender Anordnung auf dem Träger befestigt, wobei der Abstand zwischen den Schienenunterlagen durch die Belastung der Schiene und deren Stabilität bestimmt ist. Die exakte Führung des Industrieroboters ist immer Voraussetzung für ein genaues Anfahren der vom Arbeitsprogramm bestimmten Position.

Vorzugsweise sind die Schienenunterlagen mittels Befestigungsschrauben oder dergleichen auf dem Träger befestigt und haben jeweils mindestens eine bis neben die Schiene reichende Befestigungsleiste für die Schiene. Damit Gewindebohrungen für die Schienenunterlagen ohne Rücksicht auf den möglicherweise verzogenen Träger gebohrt werden können, haben die Schienenunterlagen zum Ermöglichen einer Querverschiebung Gewindestopfen mit großen Bohrungen für die Befestigungsschrauben. Die Gewindestopfen stützen sich so auf dem Träger ab, daß zwischen diesem und der Schienenunterlage ein Luftspalt entsteht. Es ist einleuchtend, daß bei dieser Schienenabstützung eine mit geringem Aufwand gerade hergestellte, relativ kleine Schiene ganz genau auf einem möglicherweise nicht geraden Träger befestigbar ist.

Die Führungsleisten sind vorzugsweise auf beiden Seiten der Schienen vorhanden und zumindest für die obere, tragende Schiene so hoch, daß die Schiene mittels Verbindungsmitteln in Form von Schrauben oder Spannstiften mit den seitlichen Führungsleisten verbunden werden kann. Die Spannstifte dienen auch als Gelenk für die Schienenunterlagen und gleichen Unebenheiten des Trägers aus, damit die Schiene spannungsfrei gerade befestigt werden kann. Für die Befestigung der unteren Schiene genügt es, wenn diese mittels Schrauben auf die Schienenunterlagen geschraubt wird. Die oberhalb und unterhalb des Trägers angeordneten und mit diesen schubfest verbundenen Schienen erhöhen wegen ihres großen Abstandes von der Nullinie des Verbund-Trägers dessen Biegefestigkeit erheblich, so daß ihr Vorhandensein in doppelter Hinsicht sinnvoll ist. Zum Erhöhen der Anfahrgenauigkeit kann eine der Schienen mit einer Zahnstange für den Eingriff eines Antriebs-Zahnrades des auf der Schiene verfahrbaren Teils versehen sein.

Der Antrieb bei einem mit einem Flächenportal verfahrbaren Industrieroboter ist vorzugsweise in einem Fahrträger angeordnet, der mit zwei Rollen auf der mit der Zahnstange versehenen Schiene des einen Trägers fährt, während der am Fahrträger angeschlossene Träger für den Industrieroboter nur mit einer Rolle auf der Schiene des anderen Trägers fährt. Die einzelne Rolle ist größer als die beiden anderen Rollen und hat einen kleineren Fahrwiderstand als die beiden Rollen auf der Antriebsseite, so daß ein Schieflauf des Trägers vermieden wird und die horizontalen Raddrücke gering gehalten werden.

Die genaue Schienenführung sowie der Zahnradantrieb über eine Zahnstange und der möglichst geringe Fahrwiderstand auf der nicht angetriebenen Seite des Industrieroboters gewährleisten, daß dieser mit seinem Greifer von einem Fahrmotor in nur 0,5 sec. auf die Geschwindigkeit von 120 m/min. beschleunigt und mit einer Genauigkeit von 0,1 mm zur vorgegebenen Position gefahren wird, wobei die zu transportierenden Werkstücke auch über 50 kg schwer sein können.

Zwei Ausführungsbeispiele der Erfindung sind in den Zeichnungen dargestellt und im folgenden erläutert. Es zeigen:

Fig. 1     einen auf einem Portal fahrenden Industrieroboter in der Seitenansicht,

Fig. 2     einen Flächenportal für einen Industrieroboter in perspektivischer Darstellung,

Fig. 3     einen Querschnitt durch einen Träger mit Schienen und daran fahrendem Industrieroboter,

Fig. 4     eine Vergrößerung aus Fig 3,

Fig. 5     eine Seitenansicht von Fig. 4,

Fig. 6     Detail "X" aus Fig. 4 in größerem Maßstab.

Ein Portal eines Industrieroboters 4 hat Säulen 1 für Träger 2, an deren Schienen 3 der Industrieroboter 4 mit Rollen 9 von einem Bereitstellplatz 5 zu einer Bearbeitungsmaschine 6 verfahrbar ist. Die Hubsäule 7 mit einer Greifvorrichtung 8 für die Werkstücke ist in dem Grundgerät des Industrieroboters 4 höhenverstellbar.

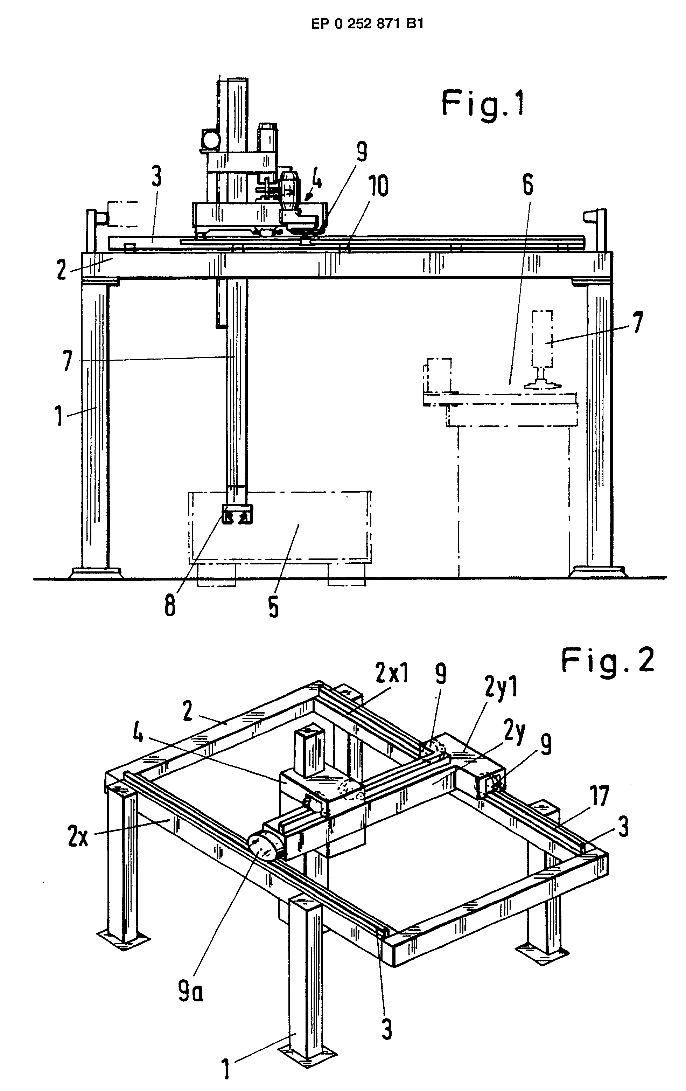

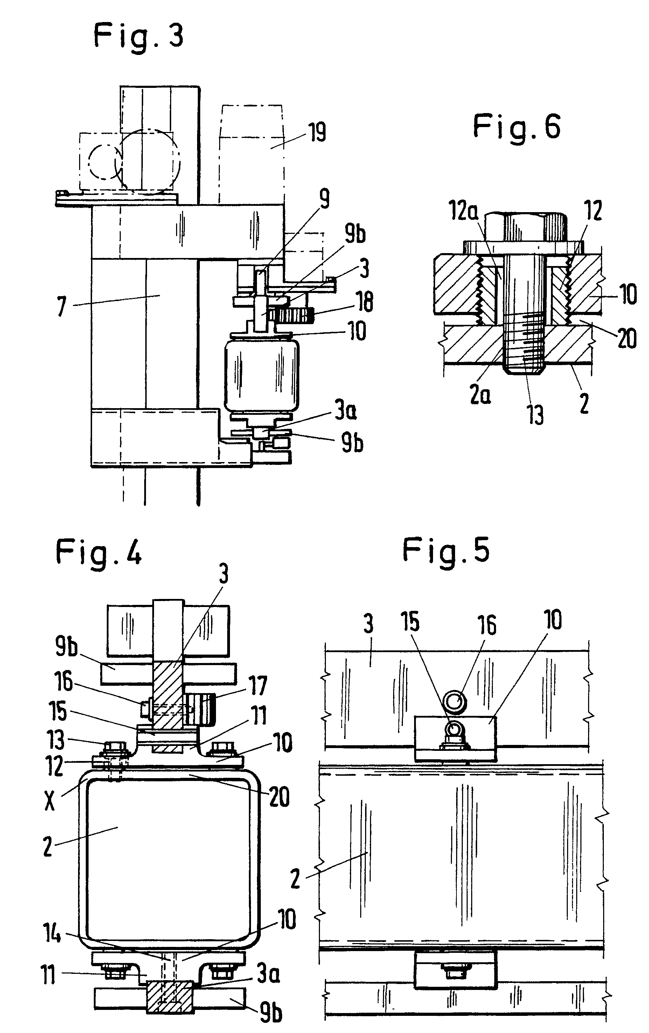

In vielen Betrieben, in denen Kleinteile bearbeitet werden, wird für die Greifvorrichtung ein Anfahrgenauigkeit von 0,1 mm verlangt. Dies ist nur bei absolut geradem Fahrweg des Industrieroboters möglich. Die großen Träger 2 lassen sich nur mit sehr großem Aufwand in der erforderlichen Präzision herstellen. Es können aber einfache Schienen 3 durch Ziehen absolut gerade hergestellt werden. Sie werden gemäß der Erfindung über kurze Schienenunterlagen 10 mit in Fig. 1 erkennbaren Abständen, zwischen denen sich die Schienen 3 nicht durchbiegen, auf den Trägern 2 abgestützt. In Fig. 3 und 4 ist zu erkennen, daß die obere Schiene 3 zum Erfüllen vor allem der Tragfunktion einen stehenden Rechteckquerschnitt hat, während die untere Schiene 3a nur der Führung dient und eine geringe Höhe hat. Die seitlichen, der Führung dienenden Rollen 9b liegen spielfrei an den Seiten der Schienen 3 und 3a an, die zwischen Führungsleisten 11 der Schienenunterlagen 10 liegen. Alle Schienenunterlagen 10 haben quer zum Träger 2 angeordnete Gewindestopfen 12 zum Ausrichten der Schiene 11 und Durchgangsbohrungen 12a für die Befestigungsschrauben 13, damit die Schienen 3 und 3a gerade an dem möglicherweise ungeraden Träger 2 befestigt werden können. Die Gewindestopfen 12 durchdringen die Schienenunterlagen 10 ganz und heben sie zum Bilden eines mehr oder weniger breiten Luftspaltes 20 vom Träger 2 ab, damit die Schiene 3 exakt gerade bleiben kann. Die Bohrungen 12a im Gewindestopfen 12 sind um ca. 20 % größer als der Durchmesser der Schrauben 13, damit auch das seitliche Ausrichten der Schienen 3 auf den Träger 2 möglich ist. Die untere Schiene 3a dient nur der Führung des als Hubsäule 7 ausgebildeten Arbeitsarms am Einträgerportal oder beim Flächenportal nach Fig. 2 an dem Träger 2y. Die untere Schiene 3a kann von Schrauben 14 zwischen den Führungsleisten 11 einfach an die Schienenunterlagen 10 geschraubt werden, wie Fig. 4 zeigt. Der Träger 2x hat keine untere Schiene. Neben der Schiene 3 des Trägers 2x1 ist die Zahnstange 17 angedeutet. Die beiden Rollen 9 im Fahrträger 2y1 sind größer als die eine Rolle 9a am Stirnende des Trägers 2y.

Fig. 4 und 5 zeigen auch die Befestigung der oberen, tragenden und führenden Schiene 3 über die Schienenunterlagen 10 auf dem Träger 2. Die Schienenunterlagen 10 haben hohe Führungsleisten 11 für die Schiene 3, die mit Spannhülsen 15 zwischen den Führungsleisten 11 gerade befestigt ist. Die Spannhülsen 15 ermöglichen die genaue Führung der Schiene 3, auch wenn die Schienenunterlage 10 auf dem möglicherweise ungeraden Träger 2 verkantet sein sollte.

An der Antriebsseite der oberen Schiene 3 ist mittels Schrauben 16 eine Zahnstange 17 für den Eingriff eines von einem Fahrmotor 19 angetriebenen Zahnrades 18 befestigt.

**Patentansprüche**

1. Industrieroboter (4) auf einem Portal der mittels Rollen auf Fahrschienen (3) eines Trägers (2) verfahrbar ist, wobei an dem am Träger verfahrbaren Arbeitsarm (7) ein Anschlußkopf (8) für ein Werkzeug oder ein Greifwerkzeug vorgesehen ist, dadurch gekennzeichnet, daß die Schienen (3) über mit Abstand voneinander angeordneten Schienenunterlagen (10) ausrichtbar auf dem Träger (2) bzw. den Trägern befestigt sind.

2. Industrieroboter nach Anspruch 1, dadurch gekennzeichnet, daß die Schienenunterlagen mittels Befestigungsschrauben (13) oder dergleichen auf dem Träger (2) befestigt sind und je mindestens eine bis neben die Schiene (3) reichende Führungsleiste (11) haben, an denen die Schiene (3) befestigt ist.

3. Führung nach Anspruch 1, dadurch gekennzeichnet, daß die Schienunterlagen (10) sich auf dem Träger (2) abstützende Gewindestopfen (12) für die Befestigungsschrauben (13) haben, und daß Durchgangsbohrungen (12a) der Gewindestopfen (12) größer sind als der Durchmesser der in Gewindebohrungen (2a) des Trägers (2) führende Befestigungsschrauben (13).

4. Führung nach Anspruch 2, dadurch gekennzeichnet, daß zwei Führungsleisten (11) auf beiden Seiten der Schiene (3) vorhanden sind.

5. Führung nach Anspruch 4, dadurch gekennzeichnet, daß die Schiene (3) mittels Verbindungsmitteln (Schrauben, Spannstifte 15) mit den seitlichen Führungsleisten (11) verbunden ist.

6. Führung nach Anspruch 3, dadurch gekennzeichnet, daß die Schiene (3) mittels Schrauben (14) zwischen den Führungsleisten (11) auf den Fuß der Schienenunterlage (10) geschraubt ist.

7. Führung nach einem oder mehreren der vorgenannten Ansprüche, dadurch gekennzeichnet, daß an einer der Schienen (3) eine Zahnstange (17) für ein Zahnrad (18) des von einem Fahrmotor (19) antreibbaren Arbeitsarms (7) des Industrieroboters befestigt ist.

8. Führung nach Anspruch 7,
dadurch gekennzeichnet,
daß der Antrieb bei einem mit einem Flächenportal verfahrbaren Industrieroboter in einem
Fahrträger (2y1) angeordnet ist, der mit zwei
Rollen (9) auf der Schiene (3) des Trägers
(2x1) fährt, während der Träger (2y) auf der
anderen Seite nur mit einer Rolle (9a) auf der
Schiene (3) des Trägers (2x) fährt.

9. Führung nach Anspruch 8,
dadurch gekennzeichnet,
daß die Rolle (9a) der nicht angetriebenen Seite größer ist als die Rollen (9) der angetriebenen Seite.

10. Führung nach einem oder mehreren der vorgenannten Ansprüche,
dadurch gekennzeichnet,
daß der Arbeitsarm (7) eine am Träger höhenverfahrbare Hubsäule ist.

**Claims**

1. An industrial robot (4) on a portal frame, which robot is movable by means of rollers on rails (3) of a beam (2), with a connection head (8) for a tool or a gripping implement being provided on the operating arm (7) which is movable on the beam, characterised in that the rails (3) are attached to the beam (2) or the beams in alignable manner via spaced-apart rail base supports (10).

2. An industrial robot according to Claim 1, characterised in that the rail base supports are attached to the beam (2) by means of attachment screws (13) or the like and each have at least one guide bar (11) which extends next to the rail (3), to which bars the rail (3) is attached.

3. An industrial robot according to Claim 1, characterised in that the rail base supports (10) have threaded plugs (12) for the attachment screws (13), which plugs are supported on the beam (2), and that through bores (12a) of the threaded plugs (12) are larger than the diameter of the attachment screws (13) guided in threaded bores (2a) of the beam (2).

4. An industrial robot according to Claim 2, characterised in that two guide bars (11) are present on both sides of the rail (3).

5. An industrial robot according to Claim 4, characterised in that the rail (3) is connected to the lateral guide bars (11) by means of connection means (screws, dowel pins 15).

6. An industrial robot according to Claim 3, characterised in that the rail (3) is screwed onto the foot of the rail base support (10) by means of screws (14) between the guide bars (11).

7. An industrial robot according to one or more of the preceding Claims, characterised in that a rack (17) for a toothed wheel (18) of the operating arm (7) of the industrial robot which can be driven by a traction motor (19) is attached to one of the rails (3).

8. An industrial robot according to Claim 7, characterised in that the drive of an industrial robot which can be moved with a surface portal frame is disposed in a travelling beam (2y1) which travels with two rollers (9) on the rail (3) of the beam (2x1), whereas the beam (2y) on the other side travels only with one roller (9a) on the rail (3) of the beam (2x).

9. An industrial robot according to Claim 8, characterised in that the roller (9a) of the non-driven side is larger than the rollers (9) of the driven side.

10. An industrial robot according to one or more of the preceding Claims, characterised in that the operating arm (7) is a lifting column which is vertically moveable on the beam.

**Revendications**

1. Robot industriel (4) sur un portique, qui est déplaçable, au moyen de galets, sur des rails de roulement (3) d'un support (2), une tête de raccordement (8) pour un outil ou un appareil de préhension étant prévue sur le bras de travail (7) déplaçable sur le support, caractérisé en ce que les rails (3) sont fixés, en pouvant être alignés, sur le support (2) ou les supports par l'intermédiaire de patins (10) agencés de façon espacée l'un de l'autre.

2. Robot industriel selon la revendication 1, caractérisé en ce que les patins sont fixés sur le support (2) au moyen de vis de fixation (13) ou analogues, et présentent, chacun, au moins une baguette de guidage (11) s'étendant jusqu'à côté du rail (3), à laquelle le rail (3) est fixé.

3. Dispositif de guidage selon la revendication 1, caractérisé en ce que les patins (10) présentent des bouchons filetés (12), s'appuyant sur le support (2), pour les vis de fixation (13), et en ce que les perçages (12a) des bouchons filetés (12) sont plus grands que le diamètre des vis de fixation (13) guidées dans des perçages taraudés (2a) du support (2).

4. Dispositif de guidage selon la revendication 2, caractérisé en ce que deux baguettes de guidage (11) sont prévues des deux côtés du rail (3).

5. Dispositif de guidage selon la revendication 4, caractérisé en ce que le rail (3) est relié à l'aide de moyens de liaison (vis, broches de serrage 15) aux baguettes de guidage latérales (11).

6. Dispositif de guidage selon la revendication 3, caractérisé en ce que le rail (3) est vissé au moyen de vis (14) entre les baguettes de guidage (11) sur le pied du patin (10).

7. Dispositif de guidage selon une ou plusieurs des revendications précédentes, caractérisé en ce que, sur un des rails (3), est fixée une crémaillère (17) pour une roue dentée (18) du bras de travail (7), pouvant être entraîné par un moteur (19), du robot industriel.

8. Dispositif de guidage selon la revendication 7, caractérisé en ce que l'entraînement, pour un robot industriel déplaçable sur un portique plat, est agencé dans un support mobile (2y1), qui se déplace à l'aide de deux galets (9) sur le rail (3) du support (2x1), tandis que le support (2y), de l'autre côté, se déplace à l'aide de seulement un galet (9a) sur le rail (3) du support (2x).

9. Dispositif de guidage selon la revendication 8, caractérisé en ce que le galet (9a) du côté non entraîné est plus grand que les galets (9) du côté entraîné.

10. Dispositif de guidage selon une ou plusieurs des revendications précédentes, caractérisé en ce que le bras de travail (7) est une colonne de levage déplaçable en hauteur sur le support.

# Fig.1

# Fig.2

Fig. 3

Fig. 6

Fig. 4

Fig. 5